# FASCICULE DE BREVET EUROPEEN

(11) **EP 2 200 260 B1**
(45) Date de publication et mention de la délivrance du brevet: **17.10.2012**
(21) Numéro de dépôt: 08291218.9
(22) Date de dépôt: 19.12.2008
(51) Int. Cl.: H04M 1/21, G04B 21/00, G04B 23/00, G10K 1/00, H04M 19/04, H04M 1/02

(54) **Téléphone portable**
Tragbares Telefon
Mobile telephone

(43) Date de publication de la demande: 23.06.2010
(73) Titulaire: CELSIUS X VI II, 75011 Paris (FR)
(72) Inventeur: Pruvot, Thomas, 75019 Paris (FR)
(74) Mandataire: Micheli & Cie SA

(56) Documents cités:
- EP-A- 0 506 179
- US-A- 3 029 593
- US-A- 6 009 167
- US-A1- 2007 125 636

## Description

La présente invention concerne un téléphone portable.

Par « téléphone portable » on entend tout objet comportant une fonction de téléphonie mobile, tel qu'un téléphone portable proprement dit ou un assistant personnel numérique (PDA).

Les téléphones portables sont utilisés par une grande proportion de la population et équipés de nombreuses fonctionnalités. Depuis plusieurs années, les progrès dans la miniaturisation des composants électroniques ont permis d'inclure appareil photo, caméra, lecteur mp3, GPS ou clavier compact permettant de taper des messages et de consulter Internet.

Comme pour d'autres appareils électroniques, les possesseurs de téléphone portable recherchent de plus en plus souvent des aspects esthétiques et fonctionnels qui leur correspondent. On observe ainsi une tendance chez les utilisateurs à vouloir personnaliser et distinguer leur téléphone portable via des choix de sonnerie, de fond d'écran, de fonctionnalité, de couleur ou de design différents.

On connaît aussi par la demande de brevet US 2007/0125636 un téléphone portable comportant un mécanisme qui déplace une ou plusieurs touches du clavier pour informer l'utilisateur, de manière tactile, d'un événement tel que la réception d'un message ou d'un appel téléphonique.

La présente invention vise à proposer un téléphone portable présentant un caractère surprenant et attrayant.

A cette fin est prévu un téléphone portable caractérisé par le fait qu'il comprend :
- un mécanisme de sonnerie comprenant au moins un élément sonore et au moins un organe actionneur apte à venir en contact mécanique avec l'élément sonore pour lui faire produire un son, et
- des moyens électroniques de commande du mécanisme de sonnerie,
et par le fait que le ou chaque élément sonore est de l'un des types suivants : tube, lame, cloche, fil.

Ainsi, le téléphone portable selon l'invention intègre un mécanisme ou dispositif mécanique de sonnerie pouvant être déclenché notamment par un appel téléphonique entrant, la réception d'un message ou par une fonction réveil du téléphone. Le téléphone portable selon l'invention peut aussi comporter un dispositif de sonnerie traditionnel, à haut-parleurs, et permettre à l'utilisateur de choisir entre l'une des deux sonneries.

Un tel mécanisme de sonnerie confère un caractère inattendu, attrayant, voire ludique au téléphone portable à la fois sur le plan sonore (une sonnerie mécanique produit un son différent d'une sonnerie à haut-parleurs) et sur le plan visuel et esthétique (le mécanisme de sonnerie peut être rendu visible à travers une glace du téléphone portable).

Des modes de réalisation particuliers de l'invention sont définis dans les revendications dépendantes annexées.

D'autres caractéristiques et avantages de l'invention apparaîtront à la lecture de la description détaillée suivante faite en référence aux dessins schématiques annexés dans lesquels :
- la figure 1 est une vue plane d'un téléphone portable à sonnerie mécanique en position fermée selon un premier mode de réalisation de l'invention ;
- la figure 2 est une vue en coupe montrant une partie du mécanisme de sonnerie du téléphone portable selon le premier mode de réalisation ;
- la figure 3 est un bloc-diagramme montrant notamment une partie électronique de commande de ce mécanisme de sonnerie ;
- la figure 4 est une vue plane d'un mécanisme de sonnerie utilisé dans un téléphone portable selon un deuxième mode de réalisation de l'invention ;
- la figure 5 est un bloc-diagramme montrant notamment une partie électronique de commande du mécanisme de sonnerie illustré à la figure 4 ;
- la figure 6 est une vue plane de profil du téléphone portable selon le deuxième mode de réalisation de l'invention ;
- la figure 7 est une vue en perspective du téléphone portable selon le deuxième mode de réalisation de l'invention, dans laquelle notamment une partie de la coque du téléphone a été retirée pour rendre visible le mécanisme de sonnerie et un mécanisme de remontage de celui-ci ;
- la figure 8 est une figure du même type que la figure 7, montrant une variante du mécanisme de remontage ;
- la figure 9 est une vue en perspective d'un téléphone portable selon le premier ou deuxième mode de réalisation utilisant un cylindre rotatif interchangeable ;
- les figures 10 et 11 sont des vues en coupe d'un mécanisme de sonnerie utilisé dans un téléphone portable selon un troisième mode de réalisation de l'invention dans deux positions différentes ;
- la figure 12 est une vue plane de dessus du mécanisme illustré aux figures 10 et 11 ; et
- la figure 13 est un bloc-diagramme montrant notamment une partie électronique de commande du mécanisme de sonnerie du téléphone portable selon le troisième mode de réalisation de l'invention.

Dans ce qui suit, différents modes de réalisation d'un téléphone portable incluant un mécanisme ou dispositif mécanique de sonnerie commandé par la partie électronique du téléphone sont décrits.

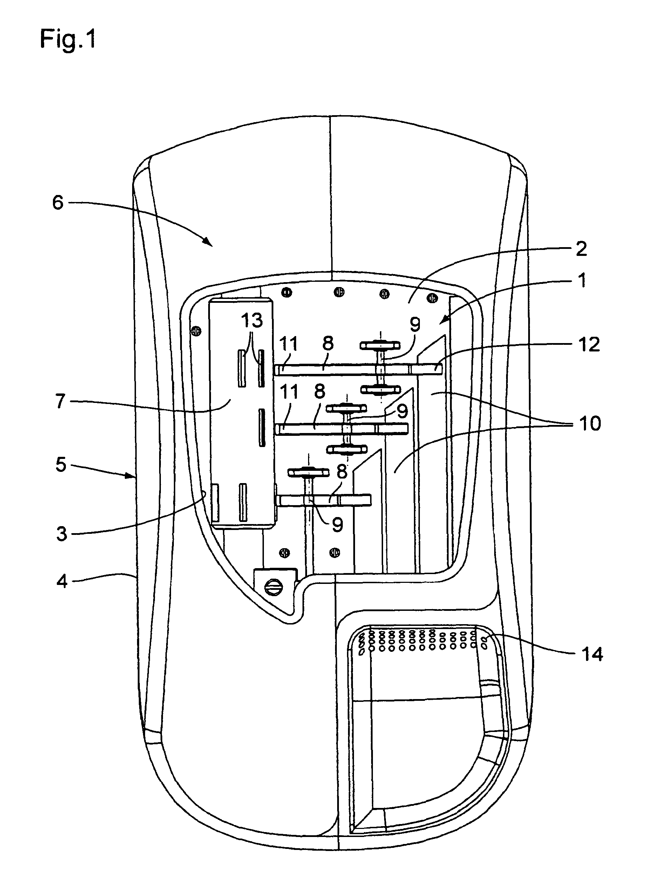

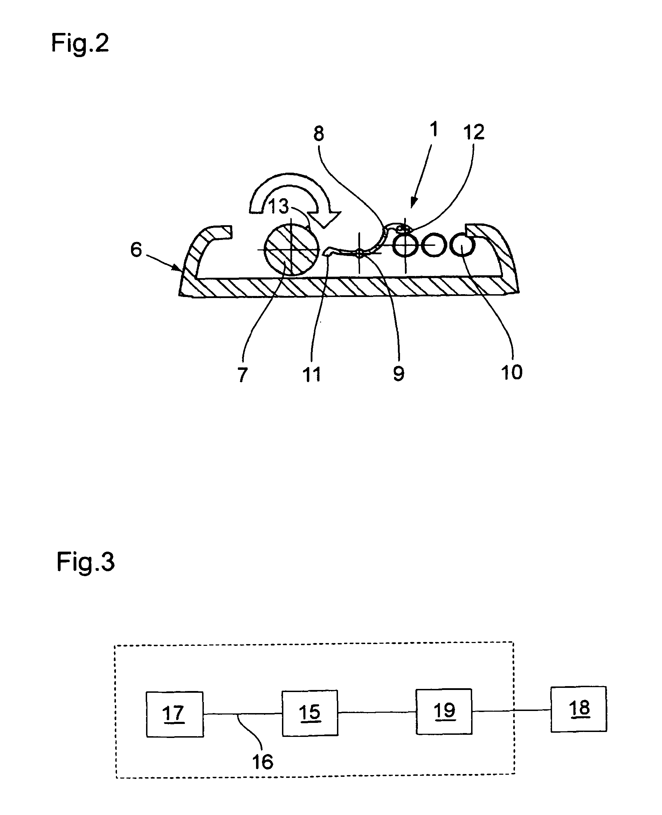

En référence aux figures 1 et 2, un téléphone portable selon un premier mode de réalisation de l'invention comprend, outre un dispositif de sonnerie à haut-parleur traditionnel (non représenté), un mécanisme de sonnerie 1. Ce mécanisme 1 peut être en tout ou partie visible à travers une glace 2 qui ferme une ouverture 3 pratiquée dans la coque 4 du téléphone. Dans l'exemple représenté, le téléphone est à clapet, c'est-à-dire qu'il est constitué de deux parties articulées 5, 6 rabattables l'une sur l'autre, le mécanisme de sonnerie 1 est disposé dans celle, 6, de ces deux parties qui comporte l'écran, et la glace 2 est montée dans la surface externe de cette partie 6, opposée à l'écran, de sorte que le mécanisme 1 est visible même lorsque les deux parties 5, 6 sont rabattues. En variante, toutefois, le mécanisme de sonnerie 1 pourrait être placé dans l'autre partie 5 du téléphone. Dans d'autres variantes, le téléphone portable selon l'invention pourrait être en deux parties coulissant l'une par rapport à l'autre ou être monobloc.

Le mécanisme de sonnerie 1 comprend un cylindre 7 rotatif autour de son axe, des marteaux 8 montés pivotants autour d'axes respectifs 9 et s'étendant perpendiculairement à l'axe du cylindre 7, et des tubes 10 associés respectivement aux marteaux 8. Chaque marteau 8 comprend une première extrémité 11 proche de la surface du cylindre 7 et une deuxième extrémité 12 proche du tube 10 respectif. Chaque marteau 8 est soumis à l'action d'un ressort de rappel (non représenté) qui le maintient dans une position neutre où la première extrémité 11 ne touche pas le cylindre 7 et la deuxième extrémité 12 ne touche pas le tube 10 respectif. Les tubes 10 ont des longueurs différentes afin que lorsqu'ils sont frappés, ils produisent par leur vibration des notes de musique différentes. Le cylindre 7 comporte sur sa surface des saillies 13. Lorsque le cylindre 7 tourne et qu'une saillie 13 donnée arrive au niveau d'un marteau 8 correspondant, la saillie 13 entre en contact avec la première extrémité 11 du marteau 8 et appuie sur celle-ci ce qui fait pivoter le marteau 8 à l'encontre de l'action de son ressort de rappel. Pendant ce pivotement, la deuxième extrémité 12 du marteau 8 se soulève, c'est-à-dire s'éloigne du tube 10 respectif. Une fois que la saillie 13 a passé la première extrémité 11 et n'est plus en contact avec elle, le marteau 8 n'est plus soumis qu'à l'action de son ressort de rappel. Ce dernier, en se détendant, fait pivoter brusquement le marteau 8 dans le sens inverse jusqu'à ce que l'extrémité 12 frappe le tube 10 respectif, produisant ainsi une note de musique, puis ramène le marteau 8 dans sa position neutre qui est proche du tube 10 mais hors de contact avec celui-ci afin de laisser le tube 10 résonner. La disposition des saillies 13 sur la surface du cylindre 7 définit la mélodie qui est jouée par le mécanisme 1 lorsque le cylindre 7 est entraîné en rotation. A une extrémité des tubes 10, des petites ouvertures 14 protégées par un filtre anti-poussières sont réalisées dans la coque 4 du téléphone afin de laisser s'échapper le son produit.

Dans des variantes de réalisation, les tubes 10 peuvent être remplacés par d'autres timbres ou éléments sonores tels que des lames, des cloches ou des fils cintrés du type de ceux que l'on trouve dans les montres mécaniques à sonnerie.

La figure 3 illustre la chaîne de commande du mécanisme de sonnerie 1. Un microcontrôleur 15 est relié au processeur principal 17 du téléphone typiquement par une liaison série 16, telle qu'une liaison de type 12C, UART ou SPI. Le microcontrôleur 15 comporte une sortie qui est reliée à un moteur électrique rotatif 18 par l'intermédiaire d'un circuit d'amplification 19. Le moteur électrique 18 est lié mécaniquement au cylindre 7 de sorte à l'entraîner en rotation sur commande du microcontrôleur 15.

Ainsi, lorsqu'un appel téléphonique est reçu par le téléphone, le processeur 17 commande au microcontrôleur 15 de déclencher la sonnerie du mécanisme 1 si l'utilisateur a préalablement sélectionné cette sonnerie comme celle à utiliser par le téléphone. Le microcontrôleur 15 active alors le moteur 18 qui se met à entraîner le cylindre 7 en rotation pour faire jouer la mélodie. Une fois que l'utilisateur a accepté ou refusé l'appel par l'intermédiaire du clavier et de l'écran du téléphone, le processeur 17 commande au microcontrôleur 15 d'arrêter la sonnerie. Le microcontrôleur 15 désactive alors le moteur 18. Si l'utilisateur a préalablement sélectionné la sonnerie traditionnelle à haut-parleur du téléphone comme celle à utiliser, le processeur 17 commande le déclenchement de cette sonnerie lors de la réception de l'appel téléphonique et ne sollicite pas le microcontrôleur 15.

Dans une variante de réalisation, le processeur 17 commande l'arrêt de la sonnerie du mécanisme 1 et le déclenchement de la sonnerie traditionnelle par haut-parleur après un laps de temps prédéterminé si l'utilisateur n'a encore ni accepté ni refusé l'appel. Ce laps de temps prédéterminé peut être programmé par l'utilisateur.

Le mécanisme de sonnerie 1 peut aussi être utilisé, sur commande du processeur 17 par l'intermédiaire du microcontrôleur 15, pour d'autres fonctions que celle consistant à informer l'utilisateur de la réception d'un appel téléphonique, par exemple pour informer de la réception d'un message SMS ou d'une charge de batterie faible, en tant que sonnerie de réveil ou pour rappeler à l'utilisateur un événement qu'il avait programmé. Il est aussi possible de dédier le mécanisme de sonnerie 1 à une ou plusieurs fonctions et le dispositif de sonnerie traditionnel à une ou plusieurs autres fonctions, afin que l'utilisateur puisse reconnaître, au type de sonnerie qu'il entend, le type d'événement ayant déclenché la sonnerie.

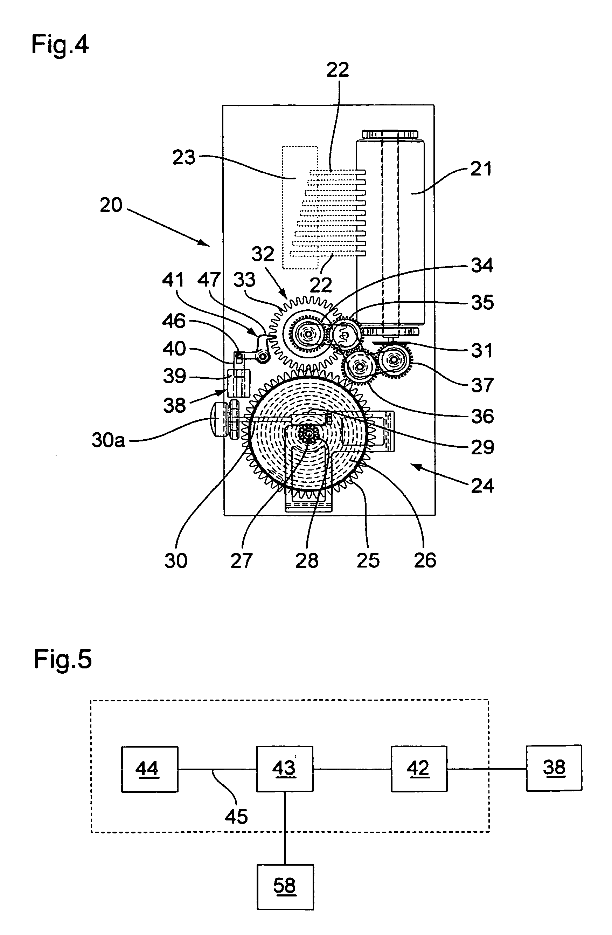

Un téléphone portable selon un deuxième mode de réalisation de l'invention comprend, outre un dispositif de sonnerie à haut-parleur traditionnel, un mécanisme de sonnerie 20 tel qu'illustré à la figure 4. Comme dans le premier mode de réalisation, le mécanisme de sonnerie 20 comporte un cylindre rotatif 21 avec des saillies (non représentées) sur sa surface, des marteaux 22 coopérant avec le cylindre 21, et des éléments sonores 23 tels que des tubes, des lames, des cloches ou des fils cintrés qui sont actionnés par les marteaux 22. A la différence du premier mode de réalisation, le cylindre rotatif 21 est entraîné non pas par un moteur électrique mais par un moteur mécanique à ressort 24.

Le moteur mécanique à ressort 24 comprend, à l'instar de l'organe moteur d'une montre mécanique, un barillet 25 logeant un ressort moteur en spirale 26. Le barillet 25 est monté pivotant autour d'un arbre 27 auquel est fixée l'extrémité intérieure du ressort 26, l'extrémité extérieure du ressort 26 étant elle fixée au barillet 25. L'arbre 27 est coaxial et solidaire d'un rochet 28 qui engrène avec un filetage sans fin d'une pièce cylindrique 29 montée sur une tige de remontoir 30. Une couronne de remontoir 30a située à l'extrémité de la tige 30 et solidaire de celle-ci fait saillie à l'extérieur de la coque du téléphone. Une rotation de la couronne 30a dans un sens fait tourner la pièce cylindrique à filetage sans fin 29 et donc l'arbre 27 dans le sens tendant à armer le ressort 26. Un cliquet (non représenté) agit sur le rochet 28 pour empêcher une rotation de l'arbre 27 dans l'autre sens. Comme dans les mécanismes de remontage de montre traditionnels, des moyens sont prévus pour qu'une rotation de la couronne 30a dans le sens inverse au sens précité n'entraîne pas le rochet 28 en rotation. Ces moyens (non représentés) peuvent comprendre des premier et deuxième pignons montés sur la tige 30. Le premier pignon est libre en rotation autour de la tige 30 et solidaire en rotation de la pièce cylindrique à filetage sans fin 29. Le deuxième pignon dit « pignon coulant » est solidaire en rotation de la tige 30 mais mobile en translation sur celle-ci, et est appliqué par un ressort contre le premier pignon. Les premier et deuxième pignons ont des dentures de type Breguet qui ne permettent l'entraînement du premier pignon par le deuxième pignon que dans un sens, c'est-à-dire le sens tendant à remonter le ressort 26.

Le barillet 25 comporte une denture périphérique qui coopère avec un pignon 31 coaxial et solidaire du cylindre 21 par l'intermédiaire d'un rouage 32. Le désarmage ou détente du ressort 26 fait tourner le barillet 25 et entraîne ainsi en rotation le cylindre 21 par l'intermédiaire du rouage 32 et du pignon 31. Dans l'exemple représenté, le rouage 32 comprend une roue 33 qui engrène avec le barillet 25, un premier pignon 34 coaxial et solidaire de la roue 33, un deuxième pignon 35 qui engrène avec le premier pignon 34, un troisième pignon 36 qui engrène avec le deuxième pignon 35 et un quatrième pignon 37 qui engrène avec le troisième pignon 36 et avec le pignon 31 en formant avec ce dernier un engrenage conique.

Si le remontage du ressort 26 s'effectue manuellement, au moyen de la couronne 30a, l'activation et la désactivation du moteur mécanique à ressort 24 sont commandées par la partie électronique du téléphone. A cet effet est utilisé un organe électromécanique comprenant par exemple un électroaimant bistable 38 comprenant une partie fixe ou stator 39 et une partie 40 mobile en translation dans la partie fixe 39 et une pièce pivotante de blocage 41 liée mécaniquement à la partie mobile 40 de l'électroaimant 38. L'électroaimant 38 est commandé, via un circuit électronique d'amplification 42, par un microcontrôleur 43 relié au processeur principal 44 du téléphone par une liaison série 45 (cf. figure 5). La partie mobile 40 de l'électroaimant 38 peut occuper deux positions stables dans lesquelles l'électroaimant 38 ne consomme pas d'énergie. La pièce pivotante 41 comporte une première extrémité 46 liée à la partie mobile 40 de l'électroaimant 38 et une deuxième extrémité 47 formant un doigt capable de s'insérer entre deux dents consécutives de la roue 33. Dans l'une de ses positions stables, la partie mobile 40 maintient la pièce 41 dans une position angulaire où le doigt 47 est en dehors de la denture de la roue 33. Dans cette position, le barillet 25, le rouage 32 et le cylindre 21 tournent sous l'action du ressort 26 qui se détend, ce qui actionne les marteaux 22 et les fait frapper les éléments sonores 23 pour jouer la mélodie définie par les saillies que comporte la surface du cylindre 21. Dans son autre position stable, la partie mobile 40 maintient la pièce 41 dans une position angulaire où le doigt 47 est inséré entre deux dents consécutives de la roue 33. Le barillet 25, le rouage 32 et le cylindre 21 ne peuvent ainsi plus tourner. La sonnerie est désactivée. En variante, la pièce 41 pourrait coopérer avec une autre denture que celle de la roue 33 pour bloquer ou libérer le barillet 25, le rouage 32 et le cylindre 21, par exemple la denture du barillet 25.

On notera que le mécanisme de sonnerie illustré à la figure 4 n'a besoin d'énergie électrique que pour faire passer l'électroaimant 38 d'une position stable à l'autre. L'énergie nécessaire pour faire sonner le mécanisme est en effet fournie par le ressort 26. Ce mode de réalisation de l'invention est donc économe en énergie électrique, en d'autres termes il sollicite moins la batterie du téléphone.

La couronne de remontoir 30a peut être remplacée par un embout solidaire de la tige de remontoir 30 et muni d'une empreinte, par exemple à six pans. Dans ce cas, le remontage du ressort 26 s'effectue au moyen d'une clef adaptée à l'empreinte. La couronne de remontoir 30a peut aussi comporter une telle empreinte pour permettre son actionnement avec ou sans clef.

Selon une autre caractéristique de l'invention, le téléphone portable selon ce deuxième mode de réalisation comprend un mécanisme permettant le remontage du ressort 26 autrement que par l'actionnement manuel de la couronne de remontoir 30a ou de l'embout précité, à savoir par une action constitutive d'une utilisation du téléphone. Dans la demande de brevet internationale N° PCT/FR2008/051554 de la présente demanderesse, des mécanismes sont décrits qui permettent le remontage d'un ressort moteur d'une montre mécanique équipant un téléphone par une action constitutive d'une utilisation du téléphone, par exemple l'ouverture de ce dernier dans le cas d'un téléphone en deux parties articulées ou coulissantes l'une par rapport à l'autre, l'appui sur une touche, etc. De tels mécanismes de remontage peuvent être utilisés dans la présente invention pour remonter le ressort 26.

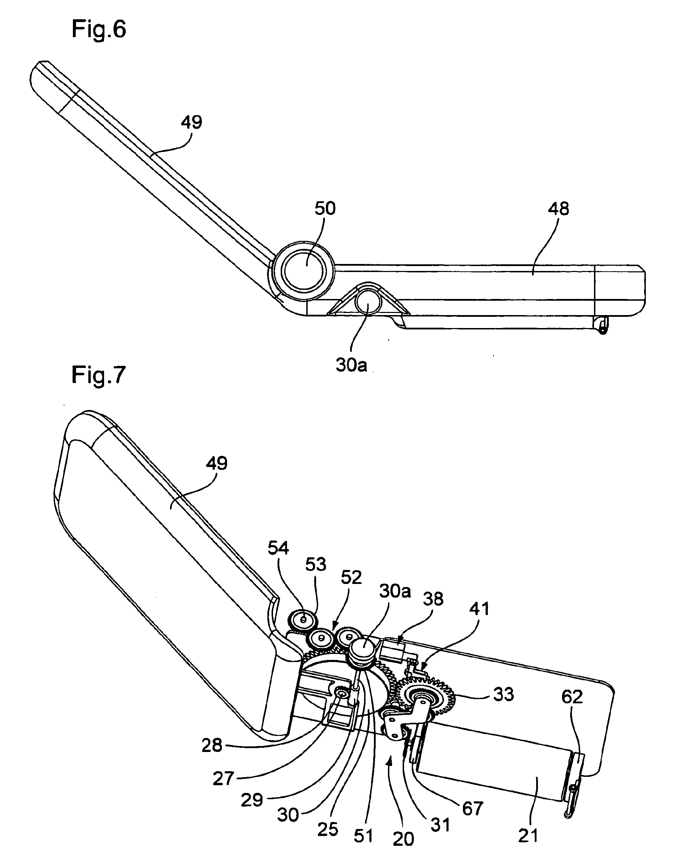

Les figures 6 et 7 montrent un exemple de tel mécanisme de remontage pouvant équiper le téléphone selon le deuxième mode de réalisation, dans le cas où ce téléphone est constitué de deux parties 48, 49 articulées l'une à l'autre par l'intermédiaire d'une charnière 50. Dans la partie 48 comprenant le clavier du téléphone est logé le mécanisme de sonnerie 20. La couronne de remontoir 30a fait saillie sur l'un des flancs de la partie 48, comme visible sur la figure 6. Un pignon 51 monté sur la tige de remontoir 30 et solidaire de cette dernière engrène par l'intermédiaire d'un train de pignons 52 avec un pignon 53 coaxial et solidaire de l'axe 54 de la charnière 50, axe 54 qui est solidaire de la partie 49. Ainsi, lorsque l'utilisateur ferme le téléphone, le pivotement de la partie 49 par rapport à la partie 48 fait tourner le pignon 53 et, par l'intermédiaire du train de pignons 52 et du pignon 51, la tige de remontoir 30 dans le sens tendant à remonter le ressort 26. Lorsque l'utilisateur ouvre le téléphone, le dispositif à pignon coulant monté sur la tige de remontoir 30 tel que décrit précédemment empêche la tige 30 d'entraîner le rochet 28. Le sens de remontage pourrait bien entendu être inversé, c'est-à-dire que l'on pourrait faire en sorte que ce soit l'ouverture du téléphone qui arme le ressort 26.

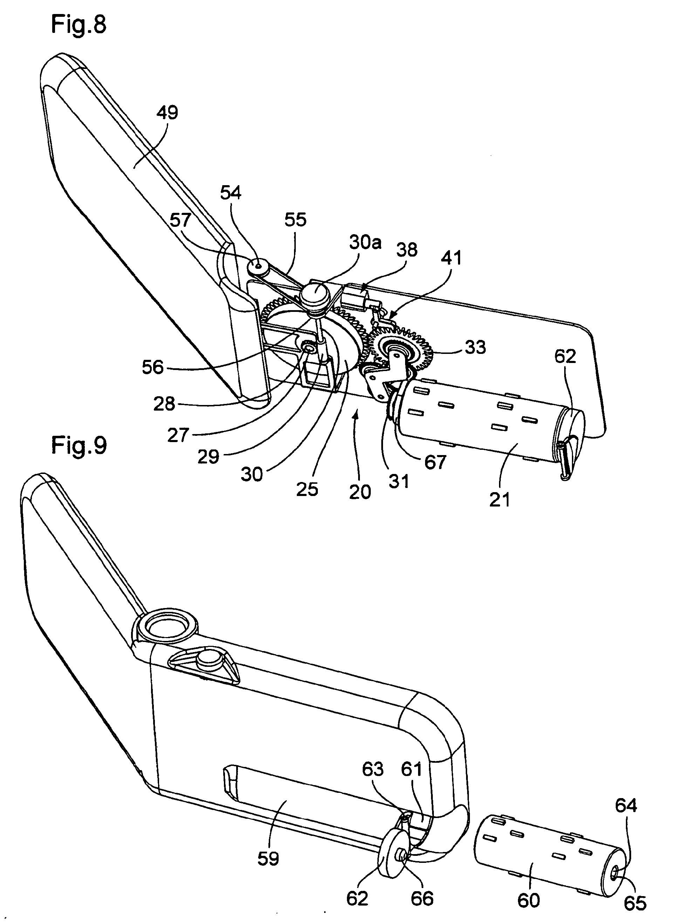

Un autre exemple de mécanisme de remontage du ressort 26 pouvant équiper le téléphone selon le deuxième mode de réalisation est montré à la figure 8. Dans cet exemple, la tige de remontoir 30 est reliée à l'axe 54 de la charnière 50 non pas par un train d'engrenage mais par une courroie 55 coopérant avec des poulies 56, 57 solidaires respectivement de la tige de remontoir 30 et de l'axe de charnière 54.

Dans le cas d'un téléphone portable en deux parties coulissant l'une par rapport à l'autre, celle des deux parties ne comportant pas le mécanisme de sonnerie peut comprendre une crémaillère qui engrène directement ou par l'intermédiaire d'un train d'engrenages avec un pignon coaxial et solidaire de la tige de remontoir 30 pour remonter le ressort 26 lors de l'ouverture ou la fermeture du téléphone.

En alternative aux mécanismes de remontage décrits ci-dessus, le téléphone portable selon le deuxième mode de réalisation peut comporter un mécanisme de remontage automatique à masse oscillante, du type de ceux dont sont munies les montres mécaniques automatiques, et qui utiliserait les mouvements du téléphone portable pour faire tourner l'arbre de barillet 27 dans le sens tendant à armer le ressort 26.

Comme dans le premier mode de réalisation, le mécanisme de sonnerie 20 peut être utilisé pour diverses fonctions, à savoir notamment pour informer l'utilisateur de la réception d'un appel téléphonique ou d'un message, pour informer l'utilisateur d'une charge de batterie faible, en tant que sonnerie de réveil ou pour rappeler un événement à l'utilisateur. Dans la première fonction, on peut prévoir que le processeur 44 commande l'arrêt de la sonnerie du mécanisme 20 et le déclenchement de la sonnerie traditionnelle par haut-parleur après un laps de temps prédéterminé si l'utilisateur n'a encore ni accepté ni refusé l'appel. Ce laps de temps prédéterminé peut être programmé par l'utilisateur.

Egalement, en référence à la figure 5, un capteur de couple 58 peut être prévu qui détermine si la tension du ressort 26 est suffisante pour faire fonctionner le mécanisme de sonnerie 20. Si le ressort 26 n'est pas suffisamment armé, le microcontrôleur 43, qui reçoit à l'une de ses entrées l'état de tension mesuré par le capteur de couple 58, n'active pas le mécanisme de sonnerie 20 et en informe le processeur 44 qui commande alors le déclenchement de la sonnerie traditionnelle.

Selon une variante avantageuse de l'invention, le cylindre 7 du premier mode de réalisation, respectivement le cylindre 21 du deuxième mode de réalisation, est interchangeable, c'est-à-dire que l'utilisateur peut le remplacer par un autre cylindre dont les saillies sont disposées différemment pour produire une autre mélodie. A cet effet, comme cela est montré à la figure 9, la coque du téléphone définit un logement 59 pour le cylindre, désigné ici par le repère 60. Le logement 59 est accessible par une ouverture 61 pratiquée dans la coque. L'ouverture 61 peut être fermée ou ouverte par une pièce mobile 62 articulée à la coque par l'intermédiaire d'une charnière 63. Le cylindre 60 comporte un alésage longitudinal central 64 et une rainure longitudinale intérieure 65 débouchant dans l'alésage 64. A une première extrémité du cylindre 60, l'alésage 64 est destiné à recevoir un axe d'entraînement, à savoir l'axe du moteur 18 dans le premier mode de réalisation et l'axe du pignon 31 dans le second mode de réalisation. Cet axe d'entraînement comprend une nervure qui coopère avec la rainure 65 pour rendre le cylindre 60 solidaire en rotation dudit axe. A la deuxième extrémité du cylindre 60, l'alésage 64 est destiné à recevoir un téton de support et de guidage 66 faisant saillie sur la surface intérieure de la pièce mobile 62 et aligné avec l'axe d'entraînement. Le cylindre 60 est maintenu en position axiale à sa première extrémité par un flasque 67 et à sa deuxième extrémité par la pièce 62 (cf. figure 7). La pièce mobile 62 peut être maintenue en position fermée par exemple par une bille d'encliquetage ou par une vis.

Par ce mode de montage, le cylindre 60 peut facilement être retiré par l'utilisateur, qui n'a qu'à ouvrir la pièce 62 et faire glisser axialement le cylindre 60 hors de son logement 59 à travers l'ouverture 61. La mise en place d'un autre cylindre dans le logement 59 est tout aussi facile.

Dans des variantes des premier et deuxième modes de réalisation, les marteaux 8, 22 peuvent être supprimés et les éléments sonores 10, 23 être sous la forme de lames vibrantes actionnées directement par les saillies de la surface du cylindre 7, 21.

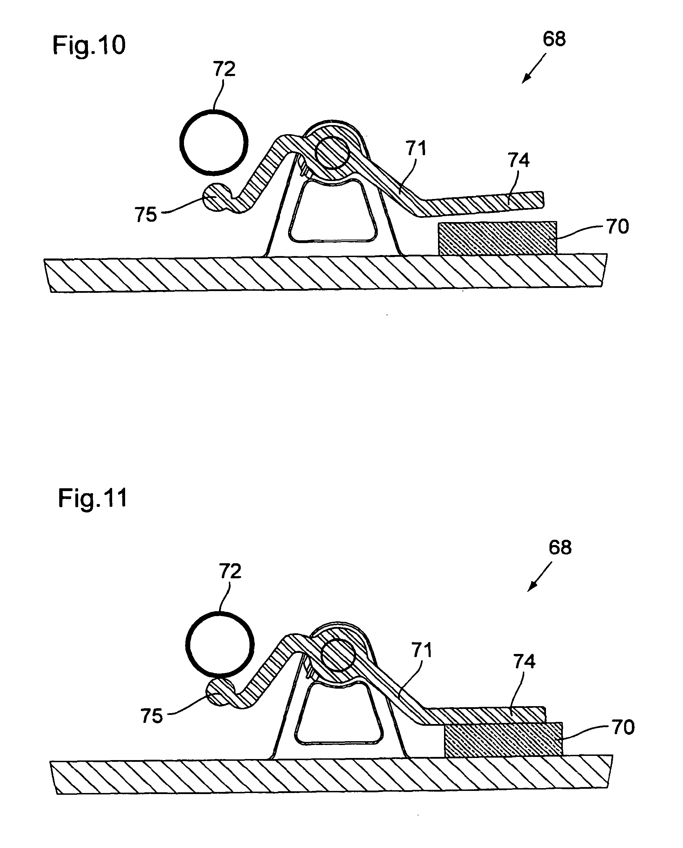

Un téléphone portable selon un troisième mode de réalisation de l'invention comprend, outre un dispositif de sonnerie à haut-parleur traditionnel, un mécanisme de sonnerie 68 tel qu'illustré partiellement aux figures 10 à 13. Ce mécanisme 68 comprend une ou plusieurs unités sonores comprenant chacune un électroaimant 70, un marteau pivotant 71 et un élément sonore 72 tel qu'un tube, une lame, une cloche ou un fil cintré. Le marteau 71 est soumis à l'action d'un ressort 73 qui, lorsque l'électroaimant 70 n'est pas alimenté, le maintient dans une position neutre où les extrémités du marteau 71 ne touchent ni l'électroaimant 70 ni l'élément sonore 72 (figure 10). Au moins une extrémité 74 du marteau 71 est en un matériau aimantable tel qu'un matériau ferreux. Lorsque l'électroaimant 70 est alimenté, il attire l'extrémité 74 du marteau 71 ce qui fait pivoter ce dernier de sorte que son autre extrémité 75 frappe l'élément sonore 72 (figure 11). En pratique, l'électroaimant 70 est commandé par des impulsions électriques. A chaque impulsion, le marteau 71 frappe l'élément sonore 72 puis revient immédiatement à sa position neutre sous l'action du ressort 73 pour laisser l'élément sonore 72 résonner. Si le mécanisme 68 comporte plusieurs unités sonores avec des éléments sonores 72 de longueurs différentes, alors des mélodies peuvent être jouées en envoyant des séquences prédéterminées d'impulsions électriques aux électroaimants 70.

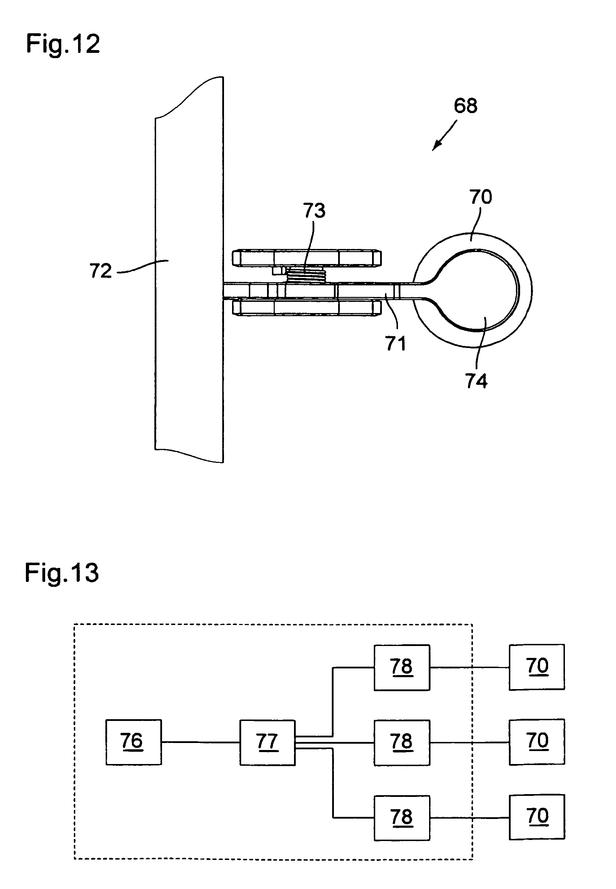

La figure 13 montre la partie électronique de commande du mécanisme de sonnerie 68. Cette partie électronique comprend le processeur principal 76 du téléphone, un microcontrôleur 77 relié au processeur principal 76 et des circuits d'amplification 78 reliés à des sorties respectives du microcontrôleur 77. Chaque électroaimant 70 du mécanisme est relié à une sortie d'un circuit d'amplification 78 respectif et est ainsi commandé, à travers ce circuit d'amplification 78, par le microcontrôleur 77.

Ce mécanisme de sonnerie 68 peut être utilisé pour les mêmes fonctions que ceux des premier et second modes de réalisation.

## Revendications

1. Téléphone portable **caractérisé par le fait qu'**il comprend :
- un mécanisme de sonnerie (1 ; 20 ; 68) comprenant au moins un élément sonore (10 ; 23 ; 72) et au moins un organe actionneur (8 ; 13 ; 22 ; 71) apte à venir en contact mécanique avec l'élément sonore (10 ; 23 ; 72) pour lui faire produire un son, et
- des moyens électroniques (15, 17, 19 ; 42-45 ; 76-78) de commande du mécanisme de sonnerie,
et **par le fait que** le ou chaque élément sonore (10 ; 23 ; 72) est de l'un des types suivants : tube, lame, cloche, fil.

2. Téléphone portable selon la revendication 1, **caractérisé par le fait que** le mécanisme de sonnerie (1 ; 20 ; 68) comprend plusieurs éléments sonores (10; 23 ; 72) agencés pour produire des notes de musique respectives différentes et des organes actionneurs respectifs (8 ; 13 ; 22 ; 71).

3. Téléphone portable selon la revendication 1 ou 2, **caractérisé par le fait que** le mécanisme de sonnerie (1 ; 20) comprend un organe rotatif (7 ; 21) comprenant des saillies (13) sur sa surface, ces saillies (13) entraînant ou constituant le(s) organe(s) actionneur(s) (8 ; 13 ; 22).

4. Téléphone portable selon la revendication 3, **caractérisé par le fait que** le mécanisme de sonnerie (1) comprend un moteur électrique (18) commandé par les moyens électroniques (15, 17, 19) pour l'entraînement en rotation de l'organe rotatif (7).

5. Téléphone portable selon la revendication 3, **caractérisé par le fait que** le mécanisme de sonnerie (20) comprend un moteur mécanique (24) à ressort (26) pour l'entraînement en rotation de l'organe rotatif (21) et un organe électromécanique (38, 41) commandé par les moyens électroniques (42-45) pour bloquer ou libérer la détente du ressort (26).

6. Téléphone portable selon la revendication 5, **caractérisé par le fait que** le moteur mécanique (24) à ressort (26) comprend un barillet (25) logeant le ressort (26) et entraînant l'organe rotatif (21) par l'intermédiaire d'au moins un engrenage (31, 32), et **par le fait que** l'organe électromécanique comprend un électroaimant bistable (38) commandé par les moyens électroniques (42-45) et un élément de blocage mécanique (41) commandé par l'électroaimant bistable (38) et comportant un doigt (47) apte à venir s'insérer entre deux dents consécutives d'une denture du barillet (25) ou de l'engrenage (32).

7. Téléphone portable selon la revendication 5 ou 6, **caractérisé par le fait qu'**il comprend un mécanisme (28, 30, 51-54 ; 54-57) permettant le remontage du ressort (26) par une action constitutive d'une utilisation du téléphone portable.

8. Téléphone portable selon la revendication 7, **caractérisé par le fait qu'**il comporte deux parties (48, 49) mobiles l'une par rapport à l'autre, **par le fait que** le mécanisme de sonnerie (20) est situé dans l'une (48) de ces deux parties, et **par le fait que** ledit mécanisme de remontage comprend une tige de remontoir (30) reliée au ressort (26) et des moyens (51-53 ; 55-57) pour convertir un mouvement relatif des deux parties (48, 49) en une rotation de la tige de remontoir (30).

9. Téléphone portable selon l'une quelconque des revendications 3 à 8, **caractérisé par le fait que** l'organe rotatif (7 ; 21) est agencé pour pouvoir être remplacé par l'utilisateur.

10. Téléphone portable selon la revendication 9, **caractérisé par le fait que** l'organe rotatif (7 ; 21) est un cylindre (60) monté à une extrémité sur un axe d'entraînement et supporté à son autre extrémité par un téton (66) reçu dans un alésage (64) du cylindre (60), ce téton (66) étant défini par une pièce mobile (62) de fermeture d'un logement (59) dans lequel se trouve le cylindre (60).

11. Téléphone portable selon la revendication 1 ou 2, **caractérisé par le fait que** le mécanisme de sonnerie (68) comprend un ou des électroaimants (70) commandés par les moyens électroniques (76-78) pour commander respectivement le(s) organe(s) actionneur(s) (71) par attraction magnétique.

12. Téléphone portable selon l'une quelconque des revendications 1 à 11, **caractérisé par le fait que** le ou chaque organe actionneur (8 ; 22 ; 71) est un marteau agencé pour frapper l'élément sonore (10; 23 ; 72) correspondant.

13. Téléphone portable selon l'une quelconque des revendications 1 à 12, **caractérisé par le fait que** les moyens électroniques de commande comprennent le processeur principal (17 ; 44 ; 76) du téléphone portable.

14. Téléphone portable selon l'une quelconque des revendications 1 à 13, **caractérisé par le fait que** le mécanisme de sonnerie (1) est visible à travers une glace (2) du téléphone portable.

## Claims

1. Mobile telephone **characterised in that** it comprises:
- a ringing mechanism (1; 20; 68) comprising at least one sounding element (10; 23; 72) and at least one actuating member (8; 13; 22; 71) able to come into mechanical contact with the sounding element (10; 23; 72) to cause it to produce a sound, and
- electronic means (15, 17, 19; 42-45; 76-78) for controlling the ringing mechanism,
and **in that** the or each sounding element (10; 23; 72) is of one of the following types: tube, strip, bell, wire.

2. Mobile telephone as claimed in claim 1, **characterised in that** the ringing mechanism (1; 20; 68) comprises several sounding elements (10; 23; 72) arranged to produce different respective musical notes and respective actuating members (8; 13; 22; 71).

3. Mobile telephone as claimed in claim 1 or 2, **characterised in that** the ringing mechanism (1; 20) comprises a rotating member (7; 21) comprising protrusions (13) on its surface, these protrusions (13) driving or constituting the actuating member(s) (8; 13; 22).

4. Mobile telephone as claimed in claim 3, **characterised in that** the ringing mechanism (1) comprises an electric motor (18) controlled by the electronic means (15, 17, 19) to rotationally drive the rotating member (7).

5. Mobile telephone as claimed in claim 3, **characterised in that** the ringing mechanism (20) comprises a mechanical motor (24) with a spring (26) for rotationally driving the rotating member (21) and an electromechanical member (38, 41) controlled by the electronic means (42-45) for preventing or allowing the relaxation of the spring (26).

6. Mobile telephone as claimed in claim 5, **characterised in that** the mechanical motor (24) with a spring (26) comprises a barrel (25) housing the spring (26) and driving the rotating member (21) by means of at least one gear (31, 32), and **in that** the electromechanical member comprises a bistable electromagnet (38) controlled by the electronic means (42-45) and a mechanical blocking element (41) controlled by the bistable electromagnet (38) and comprising a finger (47) able to be inserted between two consecutive teeth of a toothed arrangement of the barrel (25) or of the gear (32).

7. Mobile telephone as claimed in claim 5 or 6, **characterised in that** it comprises a mechanism (28, 30, 51-54; 54-57) allowing the spring (26) to be wound by an action involved in use of the mobile telephone.

8. Mobile telephone as claimed in claim 7, **characterised in that** it comprises two parts (48, 49) which can move with respect to each other, **in that** the ringing mechanism (20) is located in one (48) of these two parts, and **in that** said winding mechanism comprises a winding shaft (30) connected to the spring (26) and means (51-53; 55-57) for converting a relative movement of the two parts (48, 49) into rotation of the winding shaft (30).

9. Mobile telephone as claimed in any one of claims 3 to 8, **characterised in that** the rotating member (7; 21) is arranged so that it can be replaced by the user.

10. Mobile telephone as claimed in claim 9, **characterised in that** the rotating member (7; 21) is a cylinder (60) mounted at one end on a drive spindle and supported at its other end by a lug (66) received in a bore (64) in the cylinder (60), this lug (66) being defined by a mobile piece (62) that serves to close a housing (59) in which the cylinder (60) is located.

11. Mobile telephone as claimed in claim 1 or 2, **characterised in that** the ringing mechanism (68) comprises one or more electromagnets (70) controlled by the electronic means (76-78) to respectively control the actuating member(s) (71) by magnetic attraction.

12. Mobile telephone as claimed in any one of claims 1 to 11, **characterised in that** the or each actuating member (8; 22; 71) is a hammer arranged to strike the corresponding sounding element (10; 23; 72).

13. Mobile telephone as claimed in any one of claims 1 to 12, **characterised in that** the electronic control means comprise the main processor (17; 44; 76) of the mobile telephone.

14. Mobile telephone as claimed in any one of claims 1 to 13, **characterised in that** the ringing mechanism (1) is visible through a crystal (2) of the mobile telephone.

## Patentansprüche

1. Tragbares Telefon, **dadurch gekennzeichnet, dass** es umfasst:
- einen Läutmechanismus (1; 20; 68), umfassend mindestens ein Tonelement (10; 23; 72) und mindestens ein Betätigungselement (8; 13; 22; 71), das mit dem Tonelement (10; 23; 72) in mechanischen Kontakt kommen kann, um dieses einen Ton produzieren zu lassen, und
- elektronische Mittel (15, 17, 19; 42-45; 76-78) zur Steuerung des Läutmechanismus,
und dadurch, dass das oder jedes Tonelement (10; 23; 72) eines der folgenden Typen ist: Röhre, Lamelle, Glocke, Draht.

2. Tragbares Telefon nach Anspruch 1, **dadurch gekennzeichnet, dass** der Läutmechanismus (1; 20; 68) mehrere Tonelemente (10; 23; 72), die derart angeordnet sind, dass sie jeweils unterschiedliche Musiknoten erzeugen, und jeweilige Betätigungselemente (8; 13; 22; 71) umfasst.

3. Tragbares Telefon nach Anspruch 1 oder 2, **dadurch gekennzeichnet, dass** der Läutmechanismus (1; 20) ein Drehelement (7; 21) besitzt, umfassend Vorsprünge (13) auf seiner Oberfläche, wobei diese Vorsprünge das (die) Betätigungselement(e) (8; 13; 22) antreiben oder darstellen.

4. Tragbares Telefon nach Anspruch 3, **dadurch gekennzeichnet, dass** der Läutmechanismus (1) einen Elektromotor (18) umfasst, der von den elektronischen Mitteln (15, 17, 19) für den Drehantrieb des Drehelements (7) gesteuert wird.

5. Tragbares Telefon nach Anspruch 3, **dadurch gekennzeichnet, dass** der Läutmechanismus (20) einen mechanischen Motor (24) mit Feder (26) für den Drehantrieb des Drehelements (21) und ein elektromechanisches Element (38, 41) umfasst, das von den elektronischen Mitteln (42-45) für die Feststellung oder Freigabe der Feder (26) gesteuert wird.

6. Tragbares Telefon nach Anspruch 5, **dadurch gekennzeichnet, dass** der mechanische Motor (24) mit Feder (26) ein Federhaus (25) umfasst, in dem die Feder (26) angeordnet ist, und das das Drehelement (21) mit Hilfe mindestens eines Getriebes (31, 32) antreibt, und dadurch, dass das elektromechanische Element einen bistabilen Elektromagneten (38), der von den elektronischen Mitteln (42-45) gesteuert wird, und ein mechanisches Feststellelement (41) umfasst, das von dem bistabilen Elektromagneten (38) gesteuert wird, und umfassend einen Finger (47), der geeignet ist, sich zwischen zwei aufeinander folgende Zähne einer Zahnung des Federhauses (25) oder des Getriebes (32) einzufügen.

7. Tragbares Telefon nach Anspruch 5 oder 6, **dadurch gekennzeichnet, dass** es einen Mechanismus (28, 30, 51-54; 54-57) umfasst, der den Aufzug der Feder (26) durch eine Aktion ermöglicht, die Bestandteil einer Verwendung des tragbaren Telefons ist.

8. Tragbares Telefon nach Anspruch 7, **dadurch gekennzeichnet, dass** es zwei zueinander bewegliche Teile (48, 49) umfasst, dass der Läutmechanismus (20) in einem (48) dieser beiden Teile untergebracht ist, und dass der Aufzugmechanismus eine Aufzugstange (30), die mit der Feder (26) verbunden ist, und Mittel (51-53; 55-57) umfasst, um eine relative Bewegung der beiden Teile (48, 49) in eine Drehung der Aufzugstange (30) umzuwandeln.

9. Tragbares Telefon nach einem der Ansprüche 3 bis 8, **dadurch gekennzeichnet, dass** das Drehelement (7; 21) derart vorgesehen ist, dass es vom Benutzer ausgetauscht werden kann.

10. Tragbares Telefon nach Anspruch 9, **dadurch gekennzeichnet, dass** das Drehelement (7; 21) ein Zylinder (60) ist, der an einem Ende auf einer Antriebsachse montiert ist und an seinem anderen Ende durch einen Zapfen (66) getragen wird, der in einer Bohrung (64) des Zylinders aufgenommen ist, wobei dieser Zapfen (66) durch einen beweglichen Teil (62) zum Verschließen einer Lagerung (59), in der sich der Zylinder (60) befindet, definiert ist.

11. Tragbares Telefon nach Anspruch 1 oder 2, **dadurch gekennzeichnet, dass** der Läutmechanismus (68) einen oder mehrere Elektromagneten (70) umfasst, die von den elektronischen Mitteln (76-78) gesteuert werden, um jeweils das (die) Betätigungselement(e) (71) durch magnetische Anziehung zu steuern.

12. Tragbares Telefon nach einem der Ansprüche 1 bis 11, **dadurch gekennzeichnet, dass** das oder jedes Betätigungselement (8; 22; 71) ein Hammer ist, der dazu vorgesehen ist, auf das entsprechende Läutelement (10; 23; 72) zu schlagen.

13. Tragbares Telefon nach einem der Ansprüche 1 bis 12, **dadurch gekennzeichnet, dass** die elektronischen Steuermittel den Hauptprozessor (17; 44; 76) des tragbaren Telefons umfassen.

14. Tragbares Telefon nach einem der Ansprüche 1 bis 13, **dadurch gekennzeichnet, dass** der Läutmechanismus (1) durch eine Scheibe (2) des tragbaren Telefons sichtbar ist.
